# FASCICULE DE BREVET EUROPEEN

(11) **EP 3 947 114 B1**
(45) Date de publication et mention de la délivrance du brevet: **01.05.2024**
(21) Numéro de dépôt: 20709230.5
(22) Date de dépôt: 12.03.2020
(51) Int. Cl.: B62D 21/00, B62D 25/00, B62D 29/00

(54) **PIECE DE FONDERIE D'UN VEHICULE AUTOMOBILE**
GUSSTEIL EINES KRAFTFAHRZEUGS
CAST PART OF A MOTOR VEHICLE

(30) Priorité: 25.03.2019 FR 1903035
(43) Date de publication de la demande: 09.02.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: ROY, Jean-Baptiste, 78280 GUYANCOURT (FR)
(74) Mandataire: Renault Group
(86) Numéro de dépôt international: PCT/EP2020/056726
(87) Numéro de publication internationale: WO 2020/193166

(56) Documents cités:
- EP-A2- 1 138 581
- DE-A1- 4 322 717
- DE-A1-102004 010 792
- DE-T5-112013 003 701
- FR-A1- 2 800 693
- US-A- 5 411 308
- US-A1- 2014 084 629
- US-A1- 2017 183 036
- US-B1- 6 193 273
- US-B2- 7 805 840

## Description

La présente invention concerne une pièce de fonderie d'un véhicule automobile. L'invention se rapporte plus particulièrement à une pièce de fonderie en aluminium constituant par exemple une partie d'un coude de longeron avant ou arrière du soubassement d'un véhicule automobile. Ce coude de longeron est une pièce de structure du véhicule reliant typiquement un longeron avant du véhicule à un longeron central du véhicule dans une zone latérale du tablier avant, ou une pièce de structure reliant un longeron arrière au bavolet du véhicule.

Des contraintes d'allègement visant une moindre consommation des véhicules thermiques, hybrides et électriques amènent les constructeurs automobiles à privilégier des pièces de fonderie d'aluminium pour des noeuds de structure autrefois conçues qu'en tôles embouties et assemblées par soudure dans les process usine dits de « ferrage ». C'est le cas par exemple des coudes de longeron de certains véhicules, qui sont des pièces de structure assurant de chaque côté de la caisse du véhicule, l'interface entre des longerons avant ou arrière du véhicule et le longeron central ou bavolet du soubassement du véhicule. Ce coude de longeron avant est également relié à une traverse de structure transversale, typiquement une traverse inférieure de tablier. Leur implantation sur le soubassement du véhicule, au carrefour de plusieurs voies d'efforts, les amènent à préserver l'intégrité de la cellule habitacle du véhicule. Ces coudes de longerons doivent par conséquent être extrêmement rigides et renforcés en différentes zones. Dans l'exemple qui nous intéresse, le coude de longeron est constitué d'une partie inférieure dite en sous caisse et d'une partie supérieure dite en intérieur habitacle, assemblées l'une à l'autre de façon à former un corps creux particulièrement rigide. La partie inférieure du coude de longeron est ainsi développée en fonderie aluminium. De tels éléments sont classiquement pourvus d'un réseau de nervures de rigidification relativement dense, contrant la faiblesse de densité matière de l'aluminium par rapport à l'acier de référence. On note que la partie supérieure peut être réalisée en tôle d'acier trempé. L'assemblage des différentes parties multi-matériaux du coude de longeron est assuré par des liaisons mécaniques de type rivet auto-poinçonneurs, mais également par une colle à base d'époxy, assurant une meilleure raideur de la caisse et complétant structurellement ces liaisons mécaniques, vulnérables à l'arrachement en comparaison au point de soudure conventionnel.

Par ailleurs, les traitements de surface et anticorrosion par cataphorèse amènent à plonger la structure dans différents bains chimiques et électro-chimiques. Les fluides pénètrent dans les corps creux via des orifices dits de débullage, de vidage et d'alimentation en champs électriques anti cage de Faraday pour assurer la protection nécessaire, y compris à l'intérieur du coude de longeron. Lors du retrait de chacun des bains, le fluide doit être évacué/vidé des corps creux. Sur des structures de véhicule connus en acier, la partie inférieure de coude de longeron comporte un principe d'écoulement naturel tel un lavabo, minimisant le recours de multiples trous. A contrario des coudes en fonderie, le réseau de nervures génère de multiples zones de rétention de fluide qu'il est nécessaire d'évacuer par l'ajout de petits trous de diamètre inférieur à 10 mm pour chacune de ces alvéoles.

Or ces orifices doivent ensuite être intégralement rebouchés, de façon à empêcher la pénétration d'eau à l'intérieur du corps creux, pour les raisons suivantes : la colle à base d'époxy est très sensible à l'eau, qui lui fait perdre ses propriétés structurelles et altèrent donc sa durabilité. En outre le mariage acier-aluminium du coude de longeron fait apparaitre des différences de potentiel électrique entre les deux matières qui vont provoquer un phénomène de galvanisation, en présence d'un électrolyte tel l'eau, susceptible de corroder l'aluminium. Le coude de longeron doit par conséquent être rendu complètement étanche via des cordons de mastic d'étanchéité périphérique de la pièce et/ou des inserts gonflants et/ou des obturateurs ou pastilles pour les orifices. En comptant les deux côtés de la structure, on peut aisément compter des dizaines d'orifices à reboucher, ce qui représente un surcoût de production non négligeable, ces opérations d'obturation supplémentaires étant non automatisables donc génératrices d'opérateurs dédiés à cette nouvelle contrainte. Le document DE 43 22 717 A1 décrit une pièce de fonderie en aluminium conforme au préambule de la revendication 1.

L'invention a pour but de pallier les inconvénients précédents en proposant une pièce de fonderie en aluminium typiquement employée pour former un coude de longeron d'un véhicule automobile, qui présente une tenue et une rigidité mécanique optimales, tout en supprimant ou réduisant drastiquement le nombre d'orifices nécessaires à l'évacuation des fluides de traitement de surface et d'anticorrosion.

A cet effet, l'invention a pour objet une pièce de fonderie, notamment en aluminium, d'un véhicule automobile comprenant au moins deux parois supérieures s'élevant dans une première direction à partir d'une paroi de fond en constituant un couloir, caractérisée en ce qu'elle comprend en outre au moins deux parois inférieures prolongeant les parois supérieures au-delà de la paroi de fond dans une seconde direction opposée à la première direction, de façon que les parois supérieures et inférieures forment avec la paroi de fond une section transversale au couloir ayant la forme générale d'un H, la pièce comprenant en outre dans une ou plusieurs sections transversales déterminées au moins une nervure interne supérieure s'étendant à l'intérieur du H et transversalement aux parois supérieures et à la paroi de fond, au moins une nervure externe s'étendant à l'extérieur du H dans le prolongement de la nervure interne supérieure, au moins une nervure interne inférieure s'étendant à l'intérieur du H et dans le prolongement de la nervure interne supérieure, la nervure interne supérieure et la nervure interne inférieure étant conformées de façon à ce qu'une hauteur réduite de la nervure interne supérieure dans une zone centrale du H est compensée par une hauteur augmentée de la nervure interne inférieure dans la même zone centrale, cette hauteur étant considérée par rapport à la paroi de fond.

D'autres caractéristiques avantageuses de l'invention sont présentées ci-après. La nervure interne supérieure comporte un bord libre ayant la forme générale d'un U, la zone centrale du U étant sensiblement affleurante ou confondue avec la paroi de fond, laissant un canal de circulation des fluides.

Les parois supérieures comprennent des extensions supérieures sensiblement parallèles à la paroi de fond agencées dans des directions opposées, la nervure externe étant adossée à une face externe de la paroi supérieure et à une face inférieure de l'extension supérieure, généralement situées entre deux liaisons et garantissant la transmission des efforts transversaux.

La nervure interne inférieure comporte des parties latérales adossées aux parois inférieures et une partie centrale ayant une hauteur augmentée, les parties latérales étant reliées à la partie centrale par des zones intermédiaires de hauteur réduite par rapport aux parties latérales et à la partie centrale, ces hauteurs étant considérée vis-à-vis de la paroi de fond.

Les parties latérales de la nervure interne inférieure présentent un bord libre agencé de façon tangentielle par rapport à une face interne des parois inférieures, ce bord libre ayant en outre une forme générale curviligne entre les parois inférieures.

La partie centrale de la nervure interne inférieure a une hauteur comprise entre 5 et 20 mm, et en particulier sensiblement égale à 10 mm, cette hauteur étant considérée par rapport à la paroi de fond, pour laisser l'implantation de cette nervure, corrigeant la faiblesse liée au bord libre précédemment cité.

La nervure interne supérieure et la nervure interne inférieure ont une hauteur cumulée sensiblement constante dans une partie au moins de la zone centrale du H, cette hauteur étant considérée par rapport à la paroi de fond, et la partie considérée de la zone centrale s'étendant sur une dimension comprise entre 10 et 30 mm parallèlement à la paroi de fond.

Les parois inférieures ont une hauteur comprise entre 5 et 20 mm, et en particulier sensiblement égale à 10 mm, cette hauteur étant considérée par rapport à la paroi de fond.

La pièce de fonderie est dite profonde au sens où la hauteur du H est supérieure à 50 mm.

La pièce de fonderie comprend une pluralité de cavités délimitées chacune par des parois supérieures et une paroi de fond, ces cavités débouchant par le haut et renfermant au moins une nervure interne supérieure, tandis que des parois inférieures sont dirigées vers le bas et renferment au moins une nervure interne inférieure dans le prolongement de la nervure interne supérieure.

La pièce de fonderie constitue une partie inférieure d'un coude de longeron réalisant une interface entre un longeron avant ou arrière et un longeron central de soubassement d'un véhicule automobile.

L'invention sera mieux comprise à la lecture de la description suivante d'un exemple non limitatif de l'invention, et à la lumière des dessins annexés.
[Fig. 1] représente une vue de dessous en perspective de la partie gauche d'un ensemble de structure du soubassement d'un véhicule comprenant une pièce de fonderie selon l'invention, cette pièce étant un coude de longeron.
[Fig. 2] représente une vue partielle et agrandie de la pièce de fonderie de la figure 1.
[Fig. 3] représente une vue intérieure, autrement dit du dessus de la pièce de fonderie de la figure 1.
[Fig. 4] représente une vue extérieure, autrement dit du dessous de la pièce de fonderie de la figure 1. Cette pièce est celle de la figure 3 après retournement à 180°.
[Fig. 5] représente une section partielle d'une pièce de fonderie en U selon l'art antérieur, dans une zone hors nervure.
[Fig. 6] représente une section partielle d'une pièce de fonderie selon l'art antérieur, dans une zone traversant l'âme d'une nervure de rigidification.
[Fig. 7] représente une section partielle d'une pièce de fonderie selon l'art antérieur, dans une zone traversant un orifice d'évacuation de fluide.
[Fig. 8] représente une section partielle d'une pièce de fonderie en H selon l'invention, dans une zone hors nervure.
[Fig. 9] représente une section partielle d'une pièce de fonderie selon la figure 8, dans une zone traversant l'âme d'une nervure de rigidification.
[Fig. 10] représente une vue agrandie de la section partielle de la figure 9, indiquant des dimensions correspondant à deux exemples de réalisation décrits.
[Fig. 11] est un tableau indiquant à titre indicatif des exemples de dimensions et d'inerties comparées entre une section transversale en U de l'art antérieur et une section transversale en H selon l'invention.

Dans la description, les directions et orientations sont données en référence à un repère orthonormé direct classiquement utilisé en conception automobile, dans lequel X désigne la direction longitudinale avant - arrière du véhicule, pointant vers l'arrière du véhicule, Y est la direction transversale au véhicule pointant vers la droite du véhicule, et Z est la direction verticale, pointant vers le haut.

Les notions « avant » et « arrière » sont données en référence au sens de marche normal, vers l'avant du véhicule. Les termes « supérieur » et « inférieur » sont des indications de localisation à considérer conformément aux notions « haut » « bas » classiques.

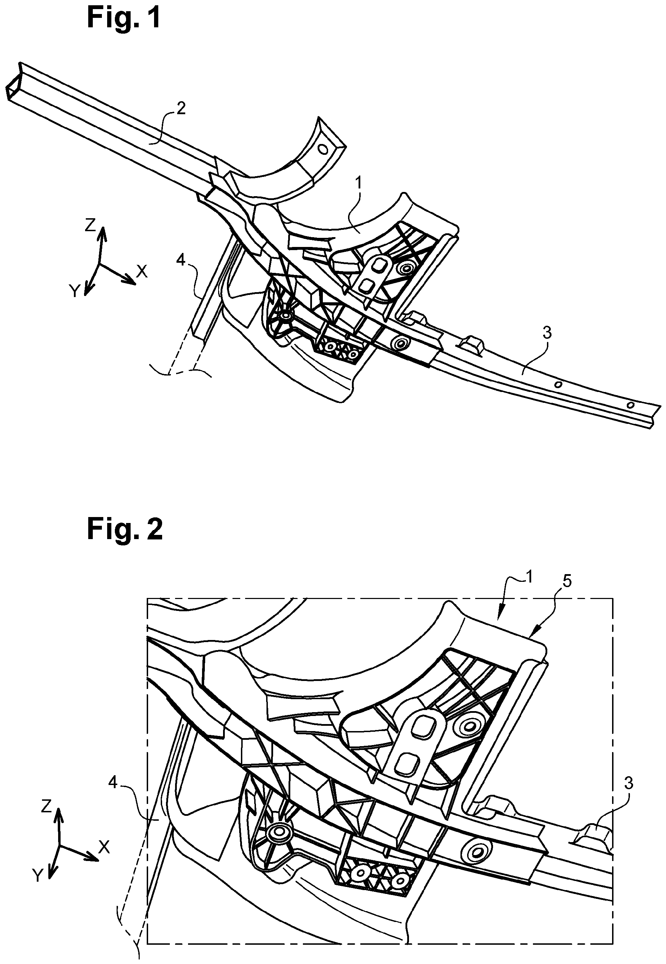

On a représenté aux figures 1 et 2 un ensemble d'éléments de structure faisant partie du soubassement d'un véhicule automobile. Cet ensemble illustré est situé du côté gauche du véhicule, étant entendu que le côté droit est agencé symétriquement de la même façon, à quelques détails près. Cet ensemble comporte en son centre un coude de longeron 1 avant, ce dernier réalisant une jonction entre un longeron avant 2 et un longeron central 3 du soubassement du véhicule, représentés respectivement à gauche sur la figure 1, ces derniers s'étendant sensiblement suivant la direction longitudinale X du véhicule. Les coudes de longeron 1 avant gauche et droit du véhicule sont classiquement reliés l'un à l'autre par une traverse milieu de tablier 4 représentée partiellement sur les figures 1 et 2. La partie inférieure du coude de longeron 1 constitue une pièce de fonderie 5 en aluminium. Le coude de longeron 1 comporte également une partie supérieure en tôle d'acier embouti complétant la pièce de fonderie 5 et formant avec celle-ci un corps creux. On s'intéressera dans la suite de l'exposé uniquement à la pièce de fonderie 5. Cette pièce de fonderie comprend un réseau de nervures de rigidification apportant à la pièce la tenue mécanique nécessaire.

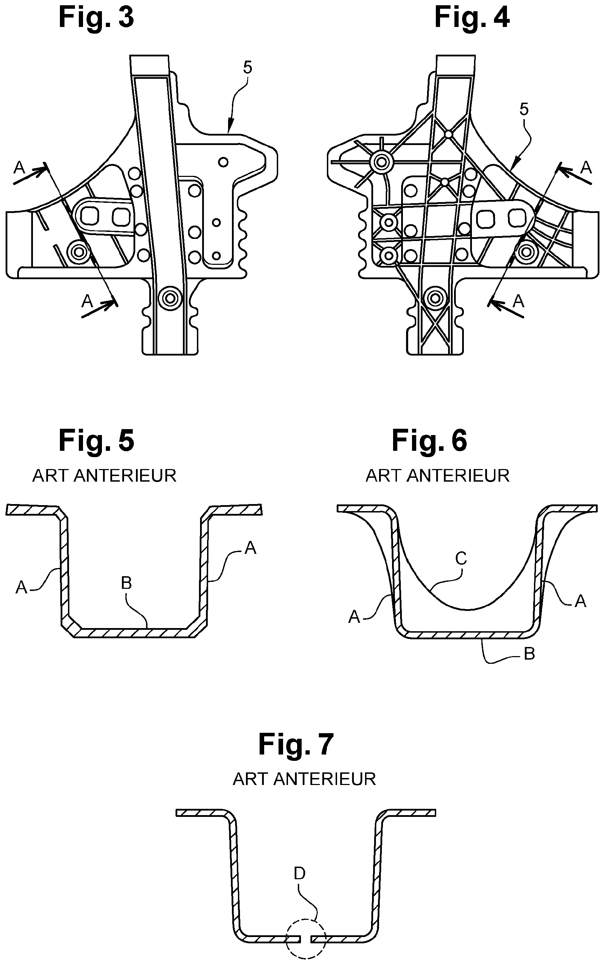

Les figures 3 et 4 illustrent des vues respectivement intérieure et extérieure de la pièce de fonderie 5, c'est-à-dire des vues de dessus et de dessous, tenant compte du fait que cette pièce ferme un corps creux. Le réseau de nervures est visible sur les deux faces de cette pièce de fonderie 5 comme on va le voir ci-après. Ce réseau de nervures est constitué de parois et nervures s'étendant de façon sensiblement perpendiculaire et verticale par rapport à une paroi de fond qui se présente ici de façon sensiblement horizontale. Le terme « horizontale » est à considérer ici de façon large et générale compte tenu du fait que le coude de longeron a une forme générale légèrement incurvée et remonte dans sa partie avant vers le longeron avant du véhicule.

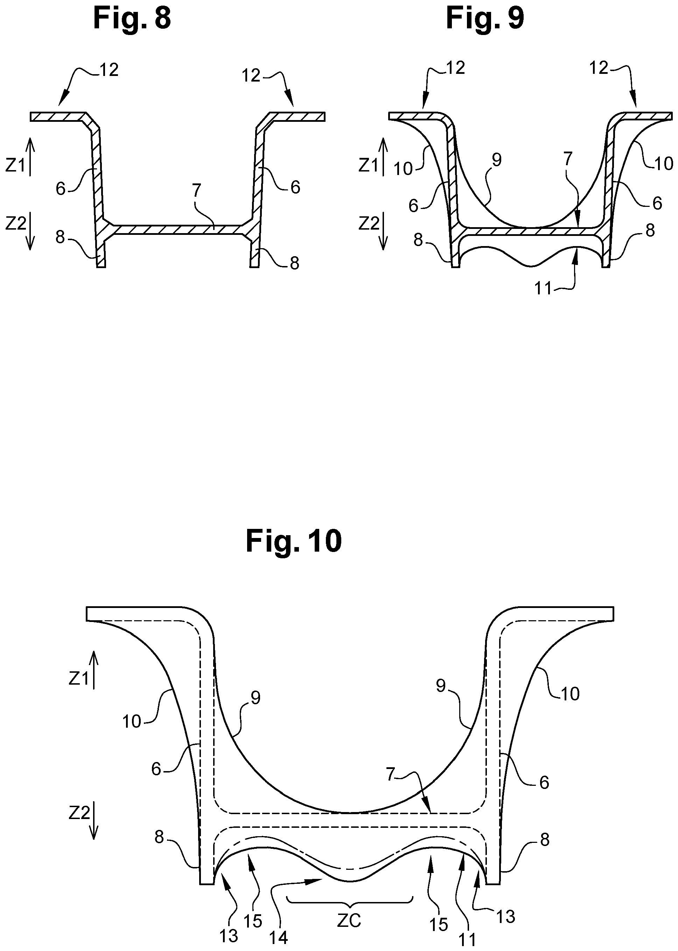

Pour illustrer l'invention, on se place dans une section transversale de la pièce de fonderie 5, cette section étant inscrite dans un plan de coupe sensiblement vertical. Une partie de cette section transversale de la pièce de fonderie selon l'invention est représentée aux figures 9 à 10.

Dans cette section transversale, la pièce de fonderie 5 comprend deux parois supérieures 6 s'élevant dans une première direction Z1 à partir d'une paroi de fond 7 en constituant un couloir. Ce couloir s'étend perpendiculairement à la section et s'étend essentiellement dans les directions X ou Y ou une combinaison des directions X et Y. Le réseau de nervures entrecroisées de la pièce de fonderie 5 implique que l'on trouve ce même type d'agencement en une multitude de sections de la pièce. La pièce de fonderie 5 comprend au moins deux parois inférieures 8 prolongeant les parois supérieures 6 au-delà de la paroi de fond 7 dans une seconde direction Z2 opposée à la première direction Z1, de façon que les parois supérieures 6 et inférieures 8 forment avec la paroi de fond 7 une section transversale au couloir ayant la forme générale d'un H.

Selon l'invention, la pièce 5 comprend en outre, dans au moins une section transversale déterminée, au moins une nervure interne supérieure 9 s'étendant à l'intérieur du H et transversalement aux parois supérieures 6 et à la paroi de fond 7, au moins une nervure externe 10 s'étendant à l'extérieur du H dans le prolongement de la nervure interne supérieure 9, au moins une nervure interne inférieure 11 s'étendant à l'intérieur du H et dans le prolongement de la nervure interne supérieure 9. Ces nervures sont inscrites dans la même section transversale, donc dans un même plan. Dans cette section transversale, la forme en H de la paroi de fond 7 et des parois supérieures 6 et inférieures 8 est noyée dans l'âme des nervures précitées. Les nervures ont une dépouille de démoulage d'environs 2° à 4°, présentant une épaisseur variable entre le sommet (plus fine) et la base (plus large) à proximité de la paroi de fond 7. Ceci est vrai tant pour la nervure interne supérieure 9 que la nervure interne inférieure 11. L'épaisseur moyenne ou la plus large correspondant sensiblement à l'épaisseur de la paroi de fond 7 et des parois supérieures 6 et inférieures 8. Si l'on se décale du plan des nervures en dehors de leur zone d'épaisseur (dans une direction perpendiculaire au plan des figures 9 et 10, à l'intérieur du couloir délimité par les parois supérieures 6 et la paroi de fond 7), on retrouve une configuration en H conforme à ce qui a été décrit ci-dessus en référence à la figure 8. C'est la raison pour laquelle on a représenté en pointillé cette forme en H sur la figure 10.

Selon un aspect remarquable de l'invention, la nervure interne supérieure 9 et la nervure interne inférieure 11 sont conformées de façon à ce qu'une hauteur réduite de la nervure interne supérieure 9 dans une zone centrale ZC du H est compensée par une hauteur augmentée de la nervure interne inférieure 11 dans la même zone centrale ZC. Ces hauteurs sont considérées par rapport à la paroi de fond 7 et sont mesurées respectivement dans la direction Z1 concernant la nervure interne supérieure 9 et dans la direction Z2 concernant la nervure interne inférieure 11.

Selon un autre aspect remarquable de l'invention, la nervure interne supérieure 9 comporte un bord libre ayant la forme générale d'un U, comme cela est visible sur les figures 9 et 10. La zone centrale du U est sensiblement affleurante ou confondue avec la paroi de fond 7. Autrement dit dans une zone centrale ZC du H, le bord libre du U est agencé de façon tangentielle par rapport à la surface supérieure de la paroi de fond 7. Ceci présente l'avantage de permettre le cheminement des fluides de traitement de surface et de cataphorèse à l'intérieur du couloir délimité par les parois supérieures 6 et la paroi de fond 7. Cet agencement bas au centre de la nervure interne supérieure 9 met en communication les espaces séparés par une ou plusieurs nervures, ce qui permet au fluide de cheminer et d'atteindre des ouvertures d'évacuation principales, sans qu'il soit nécessaire de prévoir des orifices en grand nombre et répartis dans chaque cavité de part et d'autre des nervures.

En référence à la figure 8, les parois supérieures 6 comprennent des extensions supérieures 12 sensiblement parallèles à la paroi de fond 7 agencées dans des directions opposées. Ces extensions supérieures 12 sont donc conformées à angle droit par rapport aux parois supérieures 6, à la dépouille près d'emboutissage allant de 3° à 5° par face. Comme on le voit aux figures 9 et 10, chaque nervure externe 10 est adossée d'une part à une face externe correspondante de la paroi supérieure 6 et d'autre part à une face inférieure de l'extension supérieure 12.

Par ailleurs la nervure interne inférieure 11 comporte des parties latérales 13 adossées aux parois inférieures 8, et plus précisément aux faces internes de celles-ci. Ces parties latérales 13 de la nervure interne inférieure 8 sont telles que leur bord libre de la nervure est agencé de façon tangentielle à la face interne de la paroi inférieure 8. La nervure interne inférieure 11 comporte également une partie centrale 14 ayant une hauteur augmentée et maximisée au volume architecture alloué à la caisse assemblée peinte. Les parties latérales 13 sont reliées à la partie centrale 14 par des zones intermédiaires 15 de hauteur réduite par rapport aux parties latérales 13 et à la partie centrale 14. Ces hauteurs sont considérées suivant la direction Z2 vis-à-vis de la paroi de fond 7. La partie centrale 14 est située au milieu de la zone centrale ZC, celles-ci étant équidistantes des parois inférieures 8. On note que le bord libre de la nervure interne inférieure 11 a une forme générale curviligne entre les parois inférieures 8, la succession « partie latérale 13, zone intermédiaire 15, partie centrale 14, zone intermédiaire 15 et partie latérale 13 » ayant une forme ondulée avec des hauteurs alternées.

Selon un mode de réalisation particulier de l'invention, la partie centrale 14 de la nervure interne inférieure 11 a une hauteur comprise entre 5 et 20 mm. Dans un exemple de réalisation de l'invention, cette hauteur de la partie centrale 14 est sensiblement égale à 10 mm, cette hauteur étant considérée par rapport à la paroi de fond 7.

Les parois inférieures 8 ont une hauteur comprise entre 5 et 20 mm, et en particulier sensiblement égale à 10 mm, cette hauteur étant considérée par rapport à la paroi de fond 7. Comme illustré en traits pleins à la figure 10, dans un mode particulier de réalisation de l'invention (« variante 2 »), la nervure interne inférieure 11 a une hauteur égale à la hauteur des parois inférieures 8. On a également illustré en trait mixte un autre mode de réalisation de l'invention (« variante 1 ») dans lequel la nervure interne inférieure 11 a une hauteur moindre, tant dans sa partir centrale 14 que dans les zones intermédiaires 15. A titre indicatif, la hauteur de la partie centrale est réduite d'environ 25% et la hauteur des zones intermédiaire est réduite d'environ 50% dans la variante 1 comparée à la variante 2.

Selon un aspect particulièrement avantageux de l'invention, la nervure interne supérieure 9 et la nervure interne inférieure 11 ont une hauteur cumulée sensiblement constante dans une partie au moins de la zone centrale ZC du H, cette hauteur étant considérée par rapport à la paroi de fond 7. Dans le mode de réalisation illustré, qui n'est pas exhaustif, la partie considérée de la zone centrale ZC s'étend sur une dimension comprise entre 10 et 30 mm parallèlement à la paroi de fond 7. De ce fait, le bord libre de la nervure interne inférieure 11 a une forme qui « suit » de façon sensiblement parallèle la forme du bord libre de la nervure interne supérieure 9. Les hauteurs des nervures 9, 11 se compensent donc au-dessus et en dessous de la paroi de fond 7, de façon à ne pas affaiblir la pièce de fonderie 5 en raison de la perte de hauteur de la nervure interne supérieure 9 au centre du U.

Les particularités de l'invention sont encore mieux soulignées en référence aux figures 5 à 7 qui illustrent une section transversale partielle d'une pièce de fonderie classique de l'art antérieur. Dans ce cas, la forme en H illustrée précédemment est formée par un U, délimité uniquement par des parois latérales A et une paroi de fond B, sans parois inférieures. Une nervure interne C supérieure relie les parois latérales A. Pour offrir une tenue mécanique et une rigidité équivalentes à l'invention, la nervure interne C supérieure comporte ici un bord libre nécessairement au-dessus de la paroi de fond B, ce qui constitue un obstacle et sépare les cavités pour l'évacuation des fluides de traitement de la structure. Comme illustré à la figure 7 un ou plusieurs orifices D sont alors indispensables au fond de chaque cavité pour permettre l'évacuation des fluides. L'invention permet d'échapper très avantageusement à cette contrainte, qui impose des rebouchages longs et coûteux dans la suite du process et un enchérissement produit évitable.

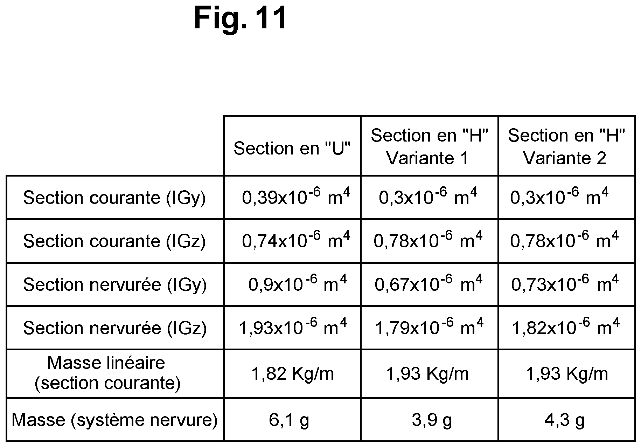

Un tableau comparatif d'inerties et de masses est indiqué à la figure 11, à titre indicatif à montrer une tendance performante et de façon nullement limitative.

Ce tableau met en parallèle dans la première colonne des valeurs pour la section en U de l'art antérieur des figures 5 à 7, avec dans les deuxièmes et troisièmes colonnes des valeurs correspondant aux variantes 1 et 2 de l'invention telle que décrit précédemment. La variante 1 comporte une nervure interne inférieure de hauteur réduite par rapport à la variante 2, qui est plus haute et utilise au mieux le volume alloué défini par l'espace dans la zone inférieure du H.

Selon une caractéristique de l'invention, la pièce de fonderie 5 est dite profonde au sens où la hauteur du H, c'est-à-dire la hauteur cumulée des parois supérieures 6 et des parois inférieures 8 est supérieure à 50 mm. Dans des exemples de réalisation, la hauteur cumulée est typiquement de l'ordre de 60, 70 ou 80 mm.

Ce qui est décrit ci-dessus pour une section partielle donnée A-A de la pièce de fonderie 5 (cf. figure 4 et par retournement à 180° de la pièce illustrée à la figure 3) peut s'appliquer à plusieurs sections partielles de la pièce de fonderie, prises dans diverses zones et dans des plans non nécessairement parallèles, en fonction de la forme considérée du réseau de nervures. En effet la pièce de fonderie 5 illustrée sur les figures 1 à 4 comprend une pluralité de cavités délimitées chacune par des parois supérieures et une paroi de fond, ces cavités débouchant par le haut et renfermant au moins une nervure interne supérieure. Des parois inférieures sont dirigées vers le bas et renferment au moins une nervure interne inférieure dans le prolongement de la nervure interne supérieure.

Dans la description ci-dessus, la pièce de fonderie 5 constitue une partie inférieure d'un coude de longeron 1 avant réalisant une interface entre un longeron avant 2 et un longeron central 3 de soubassement d'un véhicule automobile. On peut dans des variantes de réalisation employer le même type de pièce de fonderie pour le coude de longeron arrière (non représenté), réalisant une interface entre un longeron arrière et un bavolet du véhicule.

Bien entendu, l'invention n'est pas limitée aux modes ou variantes de réalisation décrits précédemment.

## Revendications

1. Pièce de fonderie, notamment en aluminium, d'un véhicule automobile comprenant au moins deux parois supérieures (6) s'élevant dans une première direction (Z1) à partir d'une paroi de fond (7) en constituant un couloir, **caractérisée en ce qu'**elle comprend en outre au moins deux parois inférieures (8) prolongeant les parois supérieures (6) au-delà de la paroi de fond (7) dans une seconde direction (Z2) opposée à la première direction (Z1), de façon que les parois supérieures (6) et inférieures (8) forment avec la paroi de fond (7) une section transversale au couloir ayant la forme générale d'un H, la pièce comprenant en outre dans une ou plusieurs sections transversales déterminées au moins une nervure interne supérieure (9) s'étendant à l'intérieur du H et transversalement aux parois supérieures (6) et à la paroi de fond (7), au moins une nervure externe (10) s'étendant à l'extérieur du H dans le prolongement de la nervure interne supérieure (9), au moins une nervure interne inférieure (11) s'étendant à l'intérieur du H et dans le prolongement de la nervure interne supérieure (9), la nervure interne supérieure (9) et la nervure interne inférieure (11) étant conformées de façon à ce qu'une hauteur réduite de la nervure interne supérieure (9) dans une zone centrale (ZC) du H est compensée par une hauteur augmentée de la nervure interne inférieure (11) dans la même zone centrale (ZC), cette hauteur étant considérée par rapport à la paroi de fond (7).

2. Pièce de fonderie selon la revendication 1, **caractérisée en ce que** la nervure interne supérieure (9) comporte un bord libre ayant la forme générale d'un U, la zone centrale du U étant sensiblement affleurante ou confondue avec la paroi de fond (7).

3. Pièce de fonderie selon la revendication 1 ou 2, **caractérisé en ce que** les parois supérieures (6) comprennent des extensions supérieures (12) sensiblement parallèles à la paroi de fond (7) agencées dans des directions opposées, la nervure externe (10) étant adossée à une face externe de la paroi supérieure (6) et à une face inférieure de l'extension supérieure (12).

4. Pièce de fonderie selon l'une quelconque des revendications précédentes, **caractérisée en ce que** la nervure interne inférieure (11) comporte des parties latérales (13) adossées aux parois inférieures (6) et une partie centrale (14) ayant une hauteur augmentée, les parties latérales (13) étant reliées à la partie centrale (14) par des zones intermédiaires (15) de hauteur réduite par rapport aux parties latérales (13) et à la partie centrale (14), ces hauteurs étant considérée vis-à-vis de la paroi de fond (7).

5. Pièce de fonderie selon la revendication 4, **caractérisée en ce que** les parties latérales (13) de la nervure interne inférieure (11) présentent un bord libre agencé de façon tangentielle par rapport à une face interne des parois inférieures (8), ce bord libre ayant en outre une forme générale curviligne entre les parois inférieures (8).

6. Pièce de fonderie selon la revendication 4 ou 5, **caractérisée en ce que** la partie centrale (14) de la nervure interne inférieure (8) a une hauteur comprise entre 5 et 20 mm, et en particulier sensiblement égale à 10 mm, cette hauteur étant considérée par rapport à la paroi de fond (7).

7. Pièce de fonderie selon l'une quelconque des revendications précédentes, **caractérisée en ce que** la nervure interne supérieure (6) et la nervure interne inférieure (8) ont une hauteur cumulée sensiblement constante dans une partie au moins de la zone centrale (ZC) du H, cette hauteur étant considérée par rapport à la paroi de fond (7), et la partie considérée de la zone centrale (ZC) s'étendant sur une dimension comprise entre 10 et 30 mm parallèlement à la paroi de fond (7).

8. Pièce de fonderie selon l'une quelconque des revendications précédentes, **caractérisée en ce que** les parois inférieures (8) ont une hauteur comprise entre 5 et 20 mm, et en particulier sensiblement égale à 10 mm, cette hauteur étant considérée par rapport à la paroi de fond (7).

9. Pièce de fonderie selon l'une quelconque des revendications précédentes, **caractérisée en ce que** la pièce de fonderie est dite profonde au sens où la hauteur du H est supérieure à 50 mm.

10. Pièce de fonderie selon l'une quelconque des revendications précédentes, **caractérisée en ce qu'**elle comprend une pluralité de cavités délimitées chacune par des parois supérieures (6) et une paroi de fond (7), ces cavités débouchant par le haut et renfermant au moins une nervure interne supérieure (9), tandis que des parois inférieures (8) sont dirigées vers le bas et renferment au moins une nervure interne inférieure (11) dans le prolongement de la nervure interne supérieure (9).

11. Pièce de fonderie selon la revendication 10, **caractérisée en ce qu'**elle constitue une partie inférieure d'un coude de longeron (1) réalisant une interface entre un longeron avant (2) ou arrière et un longeron central (3) de soubassement d'un véhicule automobile.

## Patentansprüche

1. Gussteil, insbesondere aus Aluminium, eines Kraftfahrzeugs, das mindestens zwei obere Wände (6) enthält, die sich in einer ersten Richtung (Z1) ausgehend von einer Bodenwand (7) erheben, indem sie eine Rinne bilden, **dadurch gekennzeichnet, dass** es außerdem mindestens zwei untere Wände (8) enthält, die die oberen Wände (6) jenseits der Bodenwand (7) in einer zweiten Richtung (Z2) entgegengesetzt zur ersten Richtung (Z1) verlängern, so dass die oberen (6) und unteren Wände (8) mit der Bodenwand (7) einen Schnitt quer zur Rinne bilden, der die allgemeine Form eines H hat, wobei das Teil außerdem in einem oder mehreren bestimmten Querschnitten mindestens eine obere innere Rippe (9), die sich innerhalb des H und quer zu den oberen Wänden (6) und zur Bodenwand (7) erstreckt, mindestens eine äußere Rippe (10), die sich außerhalb des H in der Verlängerung der oberen inneren Rippe (9) erstreckt, mindestens eine untere innere Rippe (11) enthält, die sich innerhalb des H und in der Verlängerung der oberen inneren Rippe (9) erstreckt, wobei die obere innere Rippe (9) und die untere innere Rippe (11) so gestaltet sind, dass eine verringerte Höhe der oberen inneren Rippe (9) in einem zentralen Bereich (ZC) des H durch eine vergrößerte Höhe der unteren inneren Rippe (11) im gleichen zentralen Bereich (ZC) kompensiert wird, wobei diese Höhe bezüglich der Bodenwand (7) betrachtet wird.

2. Gussteil nach Anspruch 1, **dadurch gekennzeichnet, dass** die obere innere Rippe (9) einen freien Rand aufweist, der die allgemeine Form eines U hat, wobei der zentrale Bereich des U die Bodenwand (7) im Wesentlichen berührt oder damit zusammenfällt.

3. Gussteil nach Anspruch 1 oder 2, **dadurch gekennzeichnet, dass** die oberen Wände (6) obere Verlängerungen (12) im Wesentlichen parallel zur Bodenwand (7) enthalten, die in entgegengesetzte Richtungen angeordnet sind, wobei die äußere Rippe (10) sich gegen eine Außenseite der oberen Wand (6) und gegen eine untere Seite der oberen Verlängerung (12) anlehnt.

4. Gussteil nach einem der vorhergehenden Ansprüche, **dadurch gekennzeichnet, dass** die untere innere Rippe (11) gegen die unteren Wände (6) angelehnte seitliche Teile (13) und einen zentralen Teil (14) aufweist, der eine vergrößerte Höhe hat, wobei die seitlichen Teile (13) mit dem zentralen Teil (14) durch Zwischenbereiche (15) verringerter Höhe bezüglich der seitlichen Teile (13) und des zentralen Teils (14) verbunden sind, wobei diese Höhe gegenüber der Bodenwand (7) betrachtet wird.

5. Gussteil nach Anspruch 4, **dadurch gekennzeichnet, dass** die seitlichen Teile (13) der unteren inneren Rippe (11) einen freien Rand aufweisen, der tangential bezüglich einer Innenseite der unteren Wände (8) angeordnet ist, wobei dieser freie Rand außerdem zwischen den unteren Wänden (8) eine allgemein gekrümmte Form hat.

6. Gussteil nach Anspruch 4 oder 5, **dadurch gekennzeichnet, dass** der zentrale Teil (14) der unteren inneren Rippe (8) eine Höhe zwischen 5 und 20 mm und insbesondere im Wesentlichen gleich 10 mm hat, wobei diese Höhe bezüglich der Bodenwand (7) betrachtet wird.

7. Gussteil nach einem der vorhergehenden Ansprüche, **dadurch gekennzeichnet, dass** die obere innere Rippe (6) und die untere innere Rippe (8) in mindestens einem Teil des zentralen Bereichs (ZC) des H eine im Wesentlichen konstante kumulierte Höhe haben, wobei diese Höhe bezüglich der Bodenwand (7) betrachtet wird, und der betrachtete Teil des zentralen Bereichs (ZC) sich über eine Abmessung erstreckt, die zwischen 10 und 30 mm parallel zur Bodenwand (7) liegt.

8. Gussteil nach einem der vorhergehenden Ansprüche, **dadurch gekennzeichnet, dass** die unteren Wände (8) eine Höhe zwischen 5 und 20 mm, und insbesondere im Wesentlichen gleich 10 mm haben, wobei diese Höhe bezüglich der Bodenwand (7) betrachtet wird.

9. Gussteil nach einem der vorhergehenden Ansprüche, **dadurch gekennzeichnet, dass** das Gussteil in dem Sinne tief genannt wird als die Höhe des H größer ist als 50 mm.

10. Gussteil nach einem der vorhergehenden Ansprüche, **dadurch gekennzeichnet, dass** es eine Vielzahl von Hohlräumen enthält, die je von oberen Wänden (6) und einer Bodenwand (7) begrenzt werden, wobei diese Hohlräume nach oben münden und mindestens eine obere innere Rippe (9) umschließen, während untere Wände (8) nach unten gerichtet sind und mindestens eine untere innere Rippe (11) in der Verlängerung der oberen inneren Rippe (9) umschließen.

11. Gussteil nach Anspruch 10, **dadurch gekennzeichnet, dass** es einen Teil einer Längsträgerkrümmung (1) bildet, die eine Verbindungsstelle zwischen einem vorderen (2) oder hinteren Längsträger und einem zentralen Längsträger (3) eines Unterbodens eines Kraftfahrzeugs herstellt.

## Claims

1. Casting, in particular made of aluminum, for a motor vehicle, comprising at least two upper walls (6) rising in a first direction (Z1) from a bottom wall (7), forming a passage, **characterized in that** it also comprises at least two lower walls (8) extending the upper walls (6) beyond the bottom wall (7) in a second direction (Z2) opposite the first direction (Z1), such that the upper walls (6) and lower walls (8) form with the bottom wall (7) a section transverse to the passage that has the overall shape of an H, the casting also comprising, in one or more given cross sections, at least one upper internal rib (9) extending inside the H and transversely to the upper walls (6) and to the bottom wall (7), at least one external rib (10) extending outside the H in the extension of the upper internal rib (9), at least one lower internal rib (11) extending inside the H and in the extension of the upper internal rib (9), the upper internal rib (9) and the lower internal rib (11) being shaped such that a reduced height of the upper internal rib (9) in a central zone (ZC) of the H is compensated for by an increased height of the lower internal rib (11) in the same central zone (ZC), this height being considered relative to the bottom wall (7).

2. Casting according to Claim 1, **characterized in that** the upper internal rib (9) has a free edge that has the overall shape of a U, the central zone of the U being substantially flush or coincident with the bottom wall (7) .

3. Casting according to Claim 1 or 2, **characterized in that** the upper walls (6) comprise upper extensions (12) that are substantially parallel to the bottom wall (7) and arranged in opposite directions, the external rib (10) bearing against an external face of the upper wall (6) and against a lower face of the upper extension (12).

4. Casting according to any one of the preceding claims, **characterized in that** the lower internal rib (11) has lateral parts (13) bearing against the lower walls (6) and a central part (14) having an increased height, the lateral parts (13) being connected to the central part (14) by intermediate zones (15) of reduced height relative to the lateral parts (13) and to the central part (14), these heights being considered with respect to the bottom wall (7).

5. Casting according to Claim 4, **characterized in that** the lateral parts (13) of the lower internal rib (11) have a free edge arranged tangentially relative to an internal face of the lower walls (8), this free edge also having a curvilinear overall shape between the lower walls (8).

6. Casting according to Claim 4 or 5, **characterized in that** the central part (14) of the lower internal rib (8) has a height of between 5 and 20 mm, and in particular substantially equal to 10 mm, this height being considered relative to the bottom wall (7).

7. Casting according to any one of the preceding claims, **characterized in that** the upper internal rib (6) and the lower internal rib (8) have a combined height that is substantially constant in at least a part of the central zone (ZC) of the H, this height being considered relative to the bottom wall (7), and the part in question of the central zone (ZC) extending over a dimension of between 10 and 30 mm parallel to the bottom wall (7).

8. Casting according to any one of the preceding claims, **characterized in that** the lower walls (8) have a height of between 5 and 20 mm, and in particular substantially equal to 10 mm, this height being considered relative to the bottom wall (7).

9. Casting according to any one of the preceding claims, **characterized in that** the casting is said to be deep in the sense that the height of the H is greater than 50 mm.

10. Casting according to any one of the preceding claims, **characterized in that** it comprises a plurality of cavities, each delimited by upper walls (6) and a bottom wall (7), these cavities opening at the top and containing at least one upper internal rib (9), while lower walls (8) are directed downward and contain between them at least one lower internal rib (11) in the extension of the upper internal rib (9).

11. Casting according to Claim 10, **characterized in that** it constitutes a lower part of a side member elbow (1) forming an interface between a front side member (2) or rear side member and a central side member (3) of the understructure of a motor vehicle.
